# EUROPEAN PATENT APPLICATION

(11) **EP 4 761 344 A1**
(43) Date of publication of application: **17.06.2026**
(21) Application number: 23948115.3
(22) Date of filing: 10.08.2023
(51) Int. Cl.: H04W 28/02

(54) **MULTI-AP COORDINATED TRANSMISSION METHOD**

(71) Applicant: Shenzhen TCL New Technology Co., Ltd, Shenzhen, Guangdong 518052 (CN)
(72) Inventor: ZHOU, Pei, Shenzhen, Guangdong 518052 (CN)
(74) Representative: Herrero & Asociados, S.L.
(86) International application number: PCT/CN2023/112386
(87) International publication number: WO 2025/030545

(57) **Abstract**

A multi-access point (AP) coordinated communication method. An AP comprises a first AP and a second AP. The method comprises: a second AP sends first information to a first AP, the first information comprising a buffer status report (BSR) related to the second AP.

## Description

### TECHNICAL FIELD

The present disclosure relates to the field of communications, and more particularly, to a multi-access point (AP) cooperative transmission method, and more specifically, to a method for sharing a buffer status report (BSR) among multiple access points (APs).

### BACKGROUND

Multiple access points cooperating with each other (Multi-AP coordination, also referred to as multi-AP cooperation) can jointly use related resources, thereby reducing interference and achieving better resource utilization. How to implement efficient and high-performance multi-AP cooperative transmission has become an urgent problem to be solved.

### SUMMARY

### Technical Problem

In multi-AP cooperative communication, how to implement efficient and high-performance multi-AP cooperative transmission has become an urgent problem to be solved.

### Technical Solution

In view of this, one aspect of the present disclosure provides a method for sharing a buffer status report (BSR) among multiple access points (APs), wherein the APs comprise a first AP and a second AP, and the method comprises: the second AP transmitting first information to the first AP, wherein the first information comprises a buffer status report (BSR) related to the second AP.

Another aspect of the present disclosure provides a method for cooperative communication among multiple access points (APs), wherein the APs comprise a first AP and a second AP, and the method comprises: the first AP receiving first information from the second AP, wherein the first information comprises a buffer status report (BSR) related to the second AP.

Another aspect of the present disclosure provides an access point, comprising:
a processor and a memory, wherein the memory is configured to store a computer program, and the processor is configured to invoke and execute the computer program stored in the memory to perform the above method.

Another aspect of the present disclosure provides a chip which includes a processor configured to invoke and execute a computer program from a memory, such that a device in which the chip is installed performs the above method.

Another aspect of the present disclosure provides a computer-readable storage medium, configured to store a computer program, wherein the computer program causes a computer to perform the above method.

### Advantageous Effects

The embodiments of the present disclosure provide a multi-AP cooperative transmission method. The APs comprise a first AP and a second AP, and the method comprises transmitting, by the second AP, first information to the first AP, wherein the first information comprises a buffer status report (BSR) related to the second AP. According to the multi-AP cooperative transmission method provided by the embodiments of the present disclosure, more resources and/or more cooperative transmission opportunities can be allocated to an AP having a larger amount of buffered data and/or more urgent buffered data, thereby enabling efficient and high-performance multi-AP cooperative transmission.

### BRIEF DESCRIPTION OF THE DRAWINGS

FIG. 1 illustrates a schematic diagram of a communication system according to an embodiment of the present disclosure.
FIG. 2 illustrates a schematic diagram of a communication method according to an embodiment of the present disclosure.
FIG. 3 illustrates a schematic diagram of a communication method according to another embodiment of the present disclosure.
FIG. 4 illustrates a schematic diagram of a communication method according to yet another embodiment of the present disclosure.
FIG. 5 illustrates a flowchart of a communication method according to an embodiment of the present disclosure.
FIG. 6 illustrates a schematic diagram of a MAC frame structure according to an embodiment of the present disclosure.
FIG. 7 illustrates a schematic diagram of a total buffer status subfield according to an embodiment of the present disclosure.
FIG. 8 illustrates a schematic diagram of an AP power-saving buffer status subfield according to an embodiment of the present disclosure.
FIG. 9 illustrates a schematic diagram of a BSR control field according to an embodiment of the present disclosure.
FIG. 10 illustrates a schematic diagram of a communication method according to an embodiment of the present disclosure.
FIG. 11 illustrates a schematic diagram of a structure of a trigger frame carrying a common information field according to an embodiment of the present disclosure.
FIG. 12 illustrates a flowchart of a communication method according to an embodiment of the present disclosure.
FIG. 13 illustrates a schematic diagram of a communication method according to an embodiment of the present disclosure.
FIG. 14 illustrates a schematic diagram of a structure of a trigger frame carrying a User Info List field according to an embodiment of the present disclosure.
FIG. 15 illustrates a schematic diagram of a special user information field according to an embodiment of the present disclosure.
FIG. 16 is a block diagram of an example system for wireless communication according to an embodiment of the present disclosure.

### DETAILED DESCRIPTION OF EMBODIMENTS

The technical solutions in the embodiments of the present disclosure will be described below with reference to the accompanying drawings. Obviously, the described embodiments are only some embodiments of the present disclosure, rather than all embodiments. Based on the embodiments of the present disclosure, all other embodiments obtained by a person skilled in the art without creative effort shall fall within the protection scope of the present disclosure.

The terms "first", "second", and the like used in the specification of the present disclosure are used to distinguish different objects, rather than to describe a specific order. For example, "a first preset value" and "a second preset value" merely indicate the existence of a preset value, and do not indicate that a corresponding physical quantity must reach a specific value. Without departing from the teachings of one or more embodiments, a first element/value discussed below may be referred to as a second element/value. An element described as a "first" element does not require or imply the existence of a second element/value or other element/value.

In the embodiments of the present disclosure, expressions such as "defined as", "set as", or "configured as" may be implemented by pre-storing corresponding code, tables, or other means capable of indicating related information in a device (for example, including an AP and a network device). The present disclosure does not limit the specific implementation manner thereof. For example, defining/predefining may refer to being defined in a protocol.

The technical solutions of the embodiments of the present disclosure may be applied to various communication systems, such as a wireless local area network (Wireless Local Area Network, WLAN), Wireless Fidelity (Wi-Fi), or other communication systems.

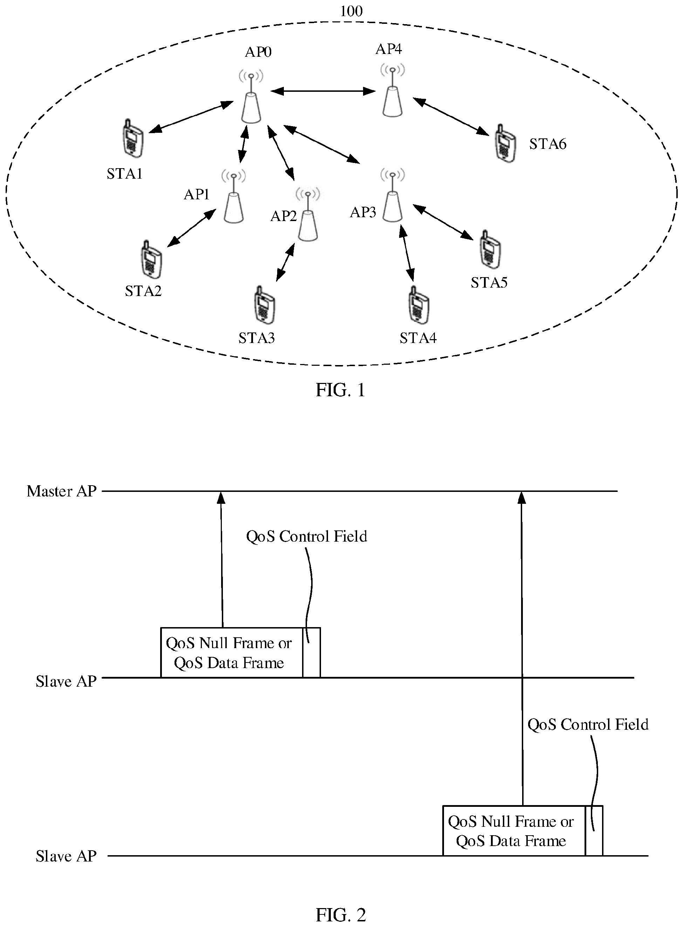

In one embodiment, a communication system 100 according to an embodiment of the present disclosure is illustrated in FIG. 1. The communication system 100 may comprise multiple access points (APs) and multiple stations (Stations, STAs) accessing a network through the APs. Although FIG. 1 illustrates five APs and six STAs, the numbers of APs and STAs in the present disclosure are not limited thereto.

Communications in the communication system may comprise communication between an AP and a STA, communication between STAs, or communication between APs.

An AP device may be a terminal device equipped with a Wi-Fi chip (for example, a mobile phone) or a network device (for example, a router). The role of a STA in the communication system is not absolute. For example, in some scenarios, when a mobile phone connects to a router, the mobile phone acts as a STA, while when the mobile phone serves as a hotspot for other mobile phones, the mobile phone acts as an AP. In the following description, a STA refers to a non-access-point (Non-AP) STA.

In some embodiments, the AP and the STA may be devices supporting an IEEE 802.11bn standard. The AP may also be a device supporting IEEE 802.11ax, IEEE 802.11be, or other current and future wireless local area network (WLAN) standards of the IEEE 802.11 family.

In a multi-AP cooperative transmission process, an AP that initiates multi-AP cooperation is usually referred to as a master AP (Master AP, MAP, Sharing AP, or first AP), for example, AP0 in FIG. 1. The master AP selects one or more surrounding APs to participate in the multi-AP cooperation, and the one or more APs are usually referred to as slave APs (Slaved AP, SAP, Shared AP, or second AP), for example, AP1 to AP4 in FIG. 1. Optionally, a slave AP may transmit information to the master AP in an active scanning mode.

The embodiments of the present disclosure provide a multi-AP cooperative transmission method, and in particular, relate to a method for sharing a buffer status report (BSR) among multiple APs. According to the multi-AP cooperative transmission method provided by the embodiments of the present disclosure, more resources and/or more cooperative transmission opportunities can be allocated to an AP having a larger amount of buffered data and/or more urgent buffered data, thereby enabling efficient and high-performance multi-AP cooperative transmission.

The embodiments of the present disclosure will be described in detail below with reference to the accompanying drawings.

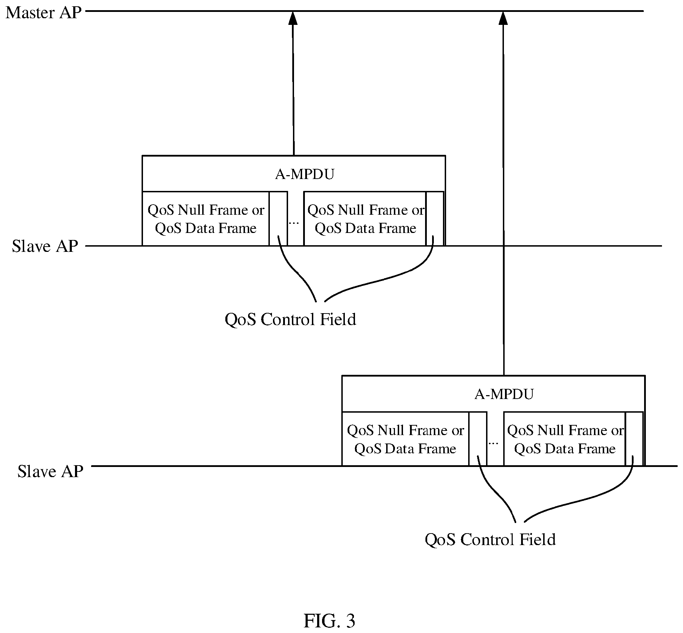

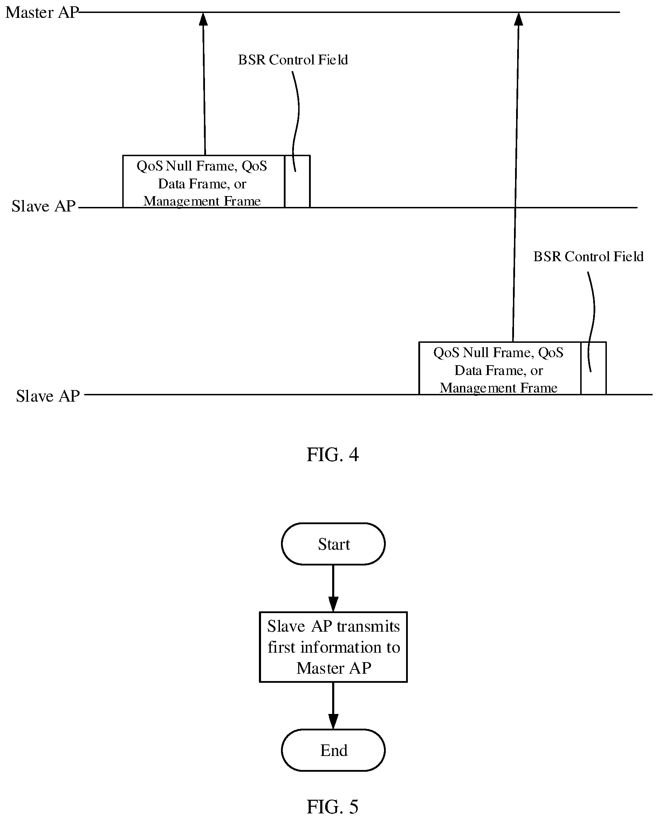

FIG. 2 illustrates a schematic diagram of a communication method according to an embodiment of the present disclosure. FIG. 3 illustrates a schematic diagram of a communication method according to another embodiment of the present disclosure. FIG. 4 illustrates a schematic diagram of a communication method according to yet another embodiment of the present disclosure. FIG. 5 illustrates a flowchart of a communication method according to an embodiment of the present disclosure.

A slave AP may proactively report a BSR to a master AP without the master AP transmitting a BSRP trigger frame.

In the embodiments of the present disclosure, a method for sharing a BSR among multiple APs may comprise: one or more slave APs transmitting first information to a master AP, wherein the first information comprises a BSR related to the slave AP (step S2).

In one embodiment, the first information comprises at least one of a QoS control field carrying the BSR and a BSR control field.

In one embodiment, the QoS control field is carried by a plurality of frames of different subtypes, wherein the different subtypes of frames comprise a QoS Null frame, a QoS Data frame, and a QoS-related frame. The QoS control field carries the BSR corresponding to a preset service (or a traffic identifier (Traffic Identifier, TID)). Herein, a QoS-related frame refers to a frame, other than a QoS Null frame and a QoS Data frame, that carries the QoS control field.

In one example, after one or more slave APs obtain a transmission opportunity, the one or more slave APs directly transmit, to the master AP, one of a QoS Null frame, a QoS Data frame, and a QoS-related frame carrying the QoS control field, wherein the QoS control field carries a BSR corresponding to one preset service (or TID), as illustrated in FIG. 2.

In one example, after one or more slave APs obtain a transmission opportunity, the one or more slave APs directly transmit, to the master AP, an aggregated medium access control protocol data unit (Aggregated MAC Protocol Data Unit, A-MPDU). The A-MPDU aggregates at least one subtype of frame carrying the QoS control field (including a QoS Null frame, a QoS Data frame, and/or a QoS-related frame), and a number of frames aggregated in the A-MPDU is greater than two, wherein the A-MPDU carries BSRs corresponding to more than two preset services (alternatively, TIDs), as illustrated in FIG. 3.

In one embodiment, the first information comprises at least one of a QoS Null frame, a QoS Data frame, and a BSR-related management frame carrying a BSR control field. The BSR control field carries BSRs corresponding to multiple preset services. Herein, a BSR-related management frame refers to another management frame carrying the BSR control field.

In one example, after one or more slave APs obtain a transmission opportunity (for example, periodically), the one or more slave APs directly transmit the first information to the master AP. The first information comprises a QoS Null frame, a QoS Data frame, or a BSR-related management frame carrying the BSR control field, wherein the BSR control field carries BSRs corresponding to multiple preset services, as illustrated in FIG. 4.

In another embodiment, a method is provided for globally configuring/declaring a rule for transmitting first information comprising a BSR from a slave AP to a master AP through a beacon frame, a probe response frame, and/or a rule configuration frame. Herein, a rule configuration frame refers to a frame, other than a beacon frame and a probe response frame, that is capable of globally configuring/declaring the rule for transmitting the first information comprising the BSR from the slave AP to the master AP.

By way of example, the rule may be as follows:
when a value of a preset field of the beacon frame, the probe response frame, or the rule configuration frame is set to 0, it indicates that the slave AP independently determines a rule for transmitting the BSR according to a buffer condition of the slave AP;
when the value of the preset field is set to 1, it indicates that the slave AP transmits the BSR corresponding to top *m* services or top *x*% of services in descending order of priority;
when the value of the preset field is set to 2, it indicates that the slave AP transmits the BSR corresponding to top *m+n* services or top (*x+y*)% of services in descending order of priority;
when the value of the preset field is set to 3, it indicates that the slave AP transmits the BSR corresponding to top *m*+*n*+*n* services or top *(x*+*y*+*y)*% of services in descending order of priority;
when the value of the preset field is set to 4, it indicates that the slave AP transmits the BSR corresponding to top *m*+*n*+*n*+*n* services or top *(x*+*y*+*y*+*y)*% of services in descending order of priority;
when the value of the preset field is set to 5, it indicates that the slave AP transmits a downlink BSR corresponding to all services to be transmitted to multiple associated STAs;
when the value of the preset field is set to 6, it indicates that the slave AP transmits an uplink BSR corresponding to all services of multiple associated STAs; and
when the value of the preset field is set to 7, it indicates that the slave AP transmits the downlink BSR and the uplink BSR,
where *m* and *n* are positive integers, and *x* and y are any values greater than 0 and less than 100.

The preset field may comprise a corresponding field preconfigured in a device (for example, including an AP and a network device). The above rules are provided merely as examples, and the present disclosure is not limited thereto.

In another embodiment, a BSRP trigger frame carries a field indicating a rule for transmitting the first information from a slave AP, so as to globally configure/declare the rule for transmitting the first information from the slave AP to the master AP. Details thereof will be described below.

The operation in which one or more slave APs transmit the first information to the master AP will be described in detail below.

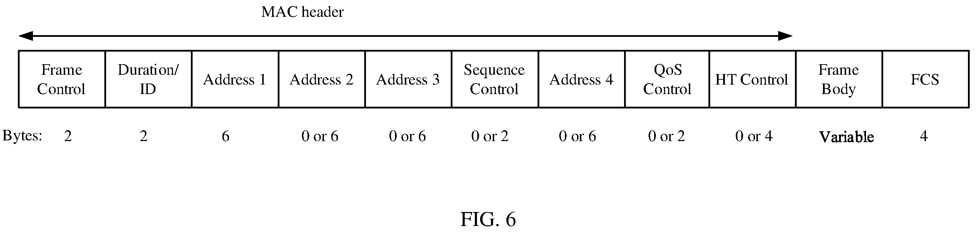

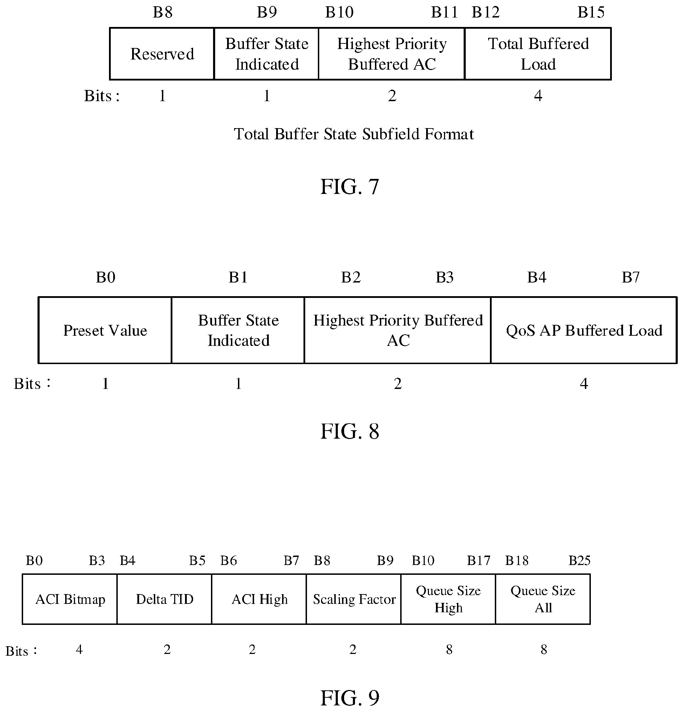

FIG. 6 illustrates a schematic diagram of a MAC frame structure according to an embodiment of the present disclosure. FIG. 7 illustrates a schematic diagram of a total buffer status subfield of a QoS control field according to an embodiment of the present disclosure.

The first information may comprise a response frame, for example, a MAC frame structure as illustrated in FIG. 6. The MAC frame may comprise a MAC header (MAC Header), a variable-length frame body (Frame Body), and a 4-byte frame check sequence. The MAC header may comprise a 2-byte frame control field, a 2-byte duration/identifier (Duration/ID) field, an address field, a 0- or 2-byte sequence control field, a 0- or 2-byte QoS control field, and a 0- or 4-byte high throughput control (HT Control) field.

In the embodiments of the present disclosure, a type of the MAC frame may be configured by a type subfield (Type Subfield) and a subtype subfield (Subtype Subfield) of the frame control field of the MAC frame. In one embodiment, when the type subfield of the frame control field is set to 10 (binary, that is, B3 B2 = 10) and the subtype subfield is set to 1000 (binary, that is, B7 B6 B5 B4 = 1000), the MAC frame represents a QoS Data type frame. When the type subfield of the frame control field is set to 10 (binary, that is, B3 B2 = 10) and the subtype subfield is set to 1100 (binary, that is, B7 B6 B5 B4 = 1100), the MAC frame represents a QoS Null type frame. By configuring the type subfield and the subtype subfield of the frame control field of the MAC frame, the MAC frame may comprise a QoS Data frame, a QoS Null frame, or another frame carrying a QoS control field.

In one embodiment, applicable frame (sub)types of the QoS control field may comprise a QoS Data frame, a QoS Data + CF-Ack frame, and/or a QoS Null frame carrying the QoS control field, transmitted by a slave AP or a hybrid coordinator (Hybrid Coordinator, HC).

In one example, when the applicable frame (sub)types are set to QoS Null frames transmitted by the HC or the slave AP (QoS Null Frames Sent by HC), bit 7 of the QoS control field is defined as a total buffer indication, and bits 8 to 15 (B8 to B15) of the QoS control field indicate one of three configured types of BSRs transmitted by the slave AP. The three configured types of BSRs comprise: a downlink BSR transmitted by the slave AP to multiple STAs associated therewith, an uplink BSR transmitted by multiple STAs associated with the slave AP to the slave AP, and the downlink BSR and the uplink BSR.

For example, when the applicable frame (sub)types are set to QoS Null frames transmitted by the HC or the slave AP (QoS Null Frames Sent by HC), a value of bit 7 of the QoS control field may be set to a second preset value (for example, 1), indicating that bits 8 to 15 (B8 to B15) of the QoS control field are defined as a total buffer status subfield (Total Buffer State Subfield), as illustrated in FIG. 7. The total buffer status subfield indicates one of the three configured types of BSRs described above. Herein, FIG. 7 only illustrates the total buffer status subfield of the QoS control field at bits B8 to B15.

By way of example, the QoS control field comprising the total buffer status subfield may be obtained by redefining an existing QoS control field. For example, when applicable frame (sub)types of the existing QoS control field are set to QoS Null frames transmitted by the HC or the slave AP, a reserved bit at bit 7 of the QoS control field may be set to the second preset value (for example, 1), and an AP power-saving buffer status subfield at bits 8 to 15 (B8 to B15) of the QoS control field may be redefined as the total buffer status subfield, so as to indicate one of the three configured types of BSRs transmitted by the slave AP. For example, when the value of bit 7 of the QoS control field is set to 1, bits 8 to 15 (B8 to B15) of the QoS control field are redefined as the total buffer status subfield. When bit 7 of the QoS control field is set to A-MSDU Present or Reserved, bits 8 to 15 (B8 to B15) of the QoS control field still indicate the AP power-saving buffer status subfield.

Optionally, a new applicable frame (sub)type may be added to the QoS control field. The newly added applicable frame (sub)type is a QoS Null frame transmitted by the HC or the slave AP, which differs from the existing QoS Null Frames Sent by HC in that a value of bit 7 of the QoS control field is set to the second preset value (for example, 1), indicating that bits 8 to 15 (B8 to B15) of the QoS control field are defined as the total buffer status subfield. For example, when the value of bit 7 of the QoS control field is set to 1, bits 8 to 15 (B8 to B15) of the QoS control field are defined as the total buffer status subfield. When bit 7 of the QoS control field is set to A-MSDU Present or Reserved, bits 8 to 15 (B8 to B15) of the QoS control field still indicate the AP power-saving buffer status subfield.

The Buffer State Indicated subfield is used to indicate whether a total buffer status of a slave AP is indicated. When the Buffer State Indicated subfield is set to 1, it indicates that the total buffer status of the slave AP is specified.

The Highest Priority Buffered Access Category (Access Category, AC) subfield is used to indicate an AC of a remaining highest-priority service, other than a MAC service data unit (MAC Service Data Unit, MSDU) or an A-MSDU of a current frame, buffered for transmission from the slave AP to multiple (or all) associated STAs and/or buffered for transmission from multiple (or all) associated STAs to the slave AP.

The Total Buffered Load subfield is used to indicate a total buffered size of all MSDUs and A-MSDUs (excluding an MSDU or an A-MSDU of a current QoS data frame) buffered for transmission from a QoS AP to multiple (or all) associated STAs and/or buffered for transmission from multiple (or all) associated STAs to the QoS AP, wherein the total buffered size is rounded to a nearest multiple of 4096 bytes and represented in units of 4096 bytes. When a value of the Total Buffered Load subfield is set to 15, it indicates that the buffered size is greater than 57,344 bytes. When the value of the Total Buffered Load subfield is set to 0, it is used only to indicate, when the Buffer State Indicated subfield is set to 1, that no buffered service exists for the indicated highest-priority buffered AC.

As illustrated in FIG. 7, the total buffer status subfield comprises the following subfields: a Buffer State Indicated subfield, a Highest Priority Buffered Access Category subfield, and a Total Buffered Load subfield. A structure of the total buffer status subfield is similar to a structure of an AP power-saving (AP PS) buffer status of an existing QoS control field.

When the Buffer State Indicated subfield is set to 0, the Highest Priority Buffered AC subfield and the Total Buffered Load subfield are reserved.

An operation in which one or more slave APs transmit first information to a master AP according to another embodiment of the present disclosure will be described below with reference to FIG. 6 and FIG. 8. FIG. 8 illustrates a schematic diagram of an AP power-saving buffer status subfield according to an embodiment of the present disclosure.

As described above, applicable frame (sub)types of the QoS control field may comprise a QoS Data frame, a QoS Data + CF-Ack frame, and/or a QoS Null frame carrying the QoS control field, transmitted by a slave AP or a hybrid coordinator (Hybrid Coordinator, HC).

In this case, a field at bits B8 to B15 of the QoS control field is an AP power-saving buffer status subfield (AP PS Buffer State Subfield). According to an embodiment of the present disclosure, by setting a value of a reserved bit at bit 0 of the AP PS buffer status subfield (or bit B8 of the QoS control field) to a third preset value (for example, 1), the AP power-saving buffer status subfield indicates one of three configured types of BSRs transmitted by the slave AP.

For example, when the slave AP or the HC transmits a QoS Null frame, the field at bits B8 to B15 of the QoS control field is the AP PS buffer status subfield. When a value of bit 0 of the AP PS buffer status subfield is set to 1, the AP power-saving buffer status subfield indicates one of the three configured types of BSRs transmitted by the slave AP.

As illustrated in FIG. 8, an AP power-saving buffer status subfield according to an embodiment of the present disclosure indicates at least one of a power-saving (PS) buffer status of a slave AP for transmission to multiple (or all) associated STAs and a PS buffer status report of multiple (or all) associated STAs for transmission to a corresponding slave AP. The AP PS buffer status subfield comprises the following three subfields: a Buffer State Indicated subfield, a Highest Priority Buffered Access Category subfield, and a QoS AP Buffered Load subfield.

The Buffer State Indicated subfield is used to indicate whether a total buffer status of the slave AP is specified. When the Buffer State Indicated subfield is set to 1, it indicates that the total buffer status of the slave AP is specified.

The Highest Priority Buffered Access Category subfield is used to indicate an access category (AC) of a remaining highest-priority service, other than an MSDU or an A-MSDU of a current frame, buffered for transmission from the slave AP to multiple (or all) associated STAs and/or buffered for transmission from multiple (or all) associated STAs to the slave AP.

The QoS AP Buffered Load subfield is used to indicate a total buffered size of all MSDUs and A-MSDUs (excluding an MSDU or an A-MSDU of a current QoS data frame) buffered for transmission from a QoS AP to multiple (or all) associated STAs and/or buffered for transmission from multiple (or all) associated STAs to the QoS AP, wherein the total buffered size is rounded to a nearest multiple of 4096 bytes and represented in units of 4096 bytes. When a value of the QoS AP Buffered Load subfield is set to 15, it indicates that the buffered size is greater than 57,344 bytes. When the value of the QoS AP Buffered Load subfield is set to 0, it is used only to indicate, when the Buffer State Indicated subfield is set to 1, that no buffered service exists for the indicated highest-priority buffered AC.

When the Buffer State Indicated subfield is set to 0, the Highest Priority Buffered AC subfield and the QoS AP Buffered Load subfield are reserved.

An operation in which one or more slave APs transmit first information to a master AP according to another embodiment of the present disclosure will be described below with reference to FIG. 6 and FIG. 9. FIG. 9 illustrates a schematic diagram of a BSR control field according to an embodiment of the present disclosure.

When a value of a +HTC subfield (bit 15) of a frame control field of a MAC frame is set to 1, the MAC frame (for example, a Control Wrapper Frame, a QoS Data frame, a QoS Null frame, or a management frame) comprises a high-throughput (High-Throughput, HT) control field. When bits 0 to 1 (B0 and B1) of the HT control field are set to 11 (binary), the HT control field is an HE variant HT control field, wherein bits B2 to B31 of the HT control field represent an aggregated control field (A-Control Field). The aggregated control field comprises a Control ID subfield and a Control Information subfield.

When a value of the Control ID subfield is set to 3, the Control Information subfield is a BSR control field.

In the embodiments of the present disclosure, when the value of the Control ID subfield is set to a fourth preset value (for example, 3), the Control Information subfield is the BSR control field, indicating at least one of a buffer status report to be transmitted by a slave AP to multiple STAs associated therewith and a buffer status report to be transmitted by multiple STAs associated with the slave AP to a corresponding slave AP, that is, one of three configured types of BSRs. The BSR control field is illustrated in FIG. 9.

In one example, when the value of the Control ID subfield is set to the fourth preset value (for example, 3), a Queue Size High subfield and a Queue Size All subfield in the BSR control field are defined to indicate at least one of a buffer status report to be transmitted by a slave AP to multiple STAs associated therewith and a buffer status report to be transmitted by multiple STAs associated with the slave AP to a corresponding slave AP.

The BSR control field may comprise: an Access Category index (Access Category index, ACI) bitmap subfield, a Delta TID subfield, an ACI High subfield, a Scaling Factor subfield, a Queue Size High subfield, and a Queue Size All subfield.

The Queue Size High subfield indicates a total amount of buffered traffic (in units of scaling factor bytes) for an access category identified by the ACI High subfield, wherein the buffered traffic is buffered by an AP (identified by a transmitter address of a frame carrying the BSR control field) for transmission to multiple (or all) STAs associated therewith.

The Queue Size All subfield indicates a total amount of buffered traffic (in units of scaling factor bytes) for access categories identified by the ACI bitmap subfield, wherein the buffered traffic is buffered by an AP (identified by a transmitter address of a frame carrying the BSR control field) for transmission to multiple (or all) STAs associated therewith.

Optionally, the Queue Size High subfield indicates a total amount of buffered traffic (in units of scaling factor bytes) for an access category identified by the ACI High subfield, wherein the buffered traffic is buffered by multiple (or all) associated STAs for transmission to an AP identified by a transmitter address of a frame carrying the BSR control field.

The Queue Size All subfield indicates a total amount of buffered traffic (in units of scaling factor bytes) for access categories identified by the ACI bitmap subfield, wherein the buffered traffic is buffered by multiple (or all) associated STAs for transmission to an AP identified by a transmitter address of a frame carrying the BSR control field.

Optionally, the Queue Size High subfield indicates a total amount of buffered traffic (in units of scaling factor bytes) for an access category identified by the ACI High subfield, wherein the buffered traffic is buffered by multiple (or all) associated STAs for transmission to an AP identified by a transmitter address of a frame carrying the BSR control field and is buffered by the AP (identified by the transmitter address of the frame carrying the BSR control field) for transmission to multiple (or all) STAs associated therewith.

The Queue Size All subfield indicates a total amount of buffered traffic (in units of scaling factor bytes) for access categories identified by the ACI bitmap subfield, wherein the buffered traffic is buffered by multiple (or all) associated STAs for transmission to an AP identified by a transmitter address of a frame carrying the BSR control field and is buffered by the AP (identified by the transmitter address of the frame carrying the BSR control field) for transmission to multiple (or all) STAs associated therewith.

In another example, a MAC frame (for example, a Control Wrapper Frame, a QoS Data frame, a QoS Null frame, or a management frame) comprises an HT control field. When bits 0 to 1 (B0 and B1) of the HT control field are set to 11 (binary), the HT control field is an HE variant HT control field, wherein bits 2 to 31 (B2 to B31) of the HT control field represent an aggregated control field (A-Control field). The aggregated control field comprises a Control ID subfield and a Control Information subfield. The Control Information subfield indicates a BSR control field. The BSR control field has a format identical to the format of the BSR control field illustrated in FIG. 9.

A value of the Control ID subfield of the aggregated control field is set to a fifth preset value (for example, any value within a range from 7 to 14), such that the Control Information subfield of the aggregated control field indicates the BSR control field. The BSR control field is used to indicate at least one of a buffer status report to be transmitted by a slave AP to multiple STAs associated therewith and a buffer status report to be transmitted by multiple STAs associated with the slave AP to a corresponding slave AP.

Structures and configurations of fields in the MAC frame that are not described in detail herein, and structures and configurations of subfields thereof, may be implemented as structures and configurations defined in Wi-Fi 6 and Wi-Fi 7 protocols.

The foregoing has described in detail embodiments in which a BSR is proactively reported to a master AP. Optionally, a slave AP may further proactively report a BSR to a master AP in response to a BSRP trigger frame transmitted by the master AP. This embodiment will be described in detail below.

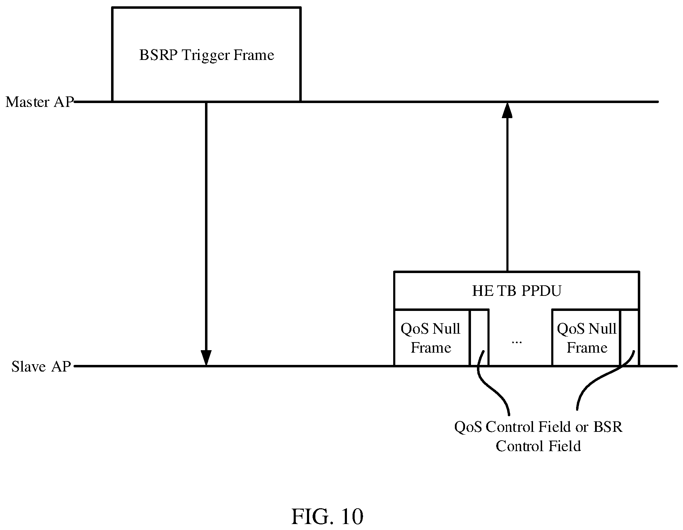

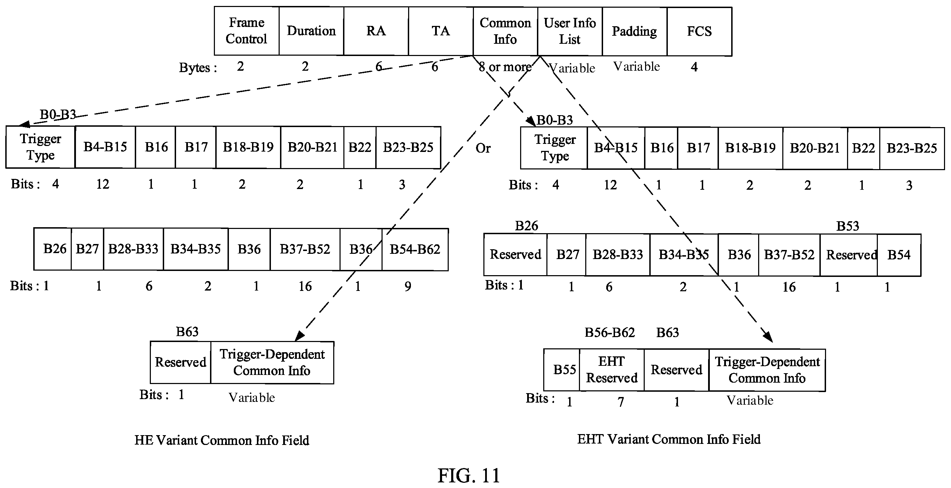

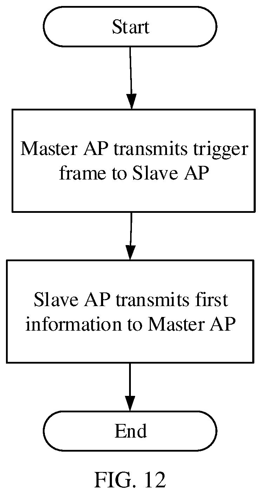

FIG. 10 illustrates a method for sharing a BSR among multiple APs according to an embodiment of the present disclosure. FIG. 11 illustrates a frame structure of a trigger frame according to an embodiment of the present disclosure. FIG. 12 illustrates a flowchart of a method for sharing a BSR among multiple APs according to an embodiment of the present disclosure.

In the embodiments of the present disclosure, a method for cooperative communication among multiple APs may comprise: a master AP transmitting a trigger frame to one or more slave APs (step S1); and in response to receiving the trigger frame, the one or more slave APs transmitting first information to the master AP, wherein the first information comprises a BSR related to the slave AP (step S2).

For ease of description, FIG. 10 illustrates an example in which one slave AP performs cooperative communication with the master AP. In the present disclosure, a number of slave APs may be two or more.

In one embodiment, step S1 may comprise: the master AP transmitting a Buffer Status Report Poll (BSRP) trigger frame to one or more slave APs.

A trigger frame structure may comprise a 2-byte frame control (Frame Control) field, a 2-byte duration (Duration) field, a 6-byte receiver address (Receiver Address, RA) field, a 6-byte transmitter address (Transmitter Address, TA) field, an 8-byte or longer common information (Common Info) field, a variable-length User Info List field, a variable-length Padding field, and a 4-byte frame check sequence (Frame Check Sequence, FCS) field.

The common information field of the trigger frame may comprise at least one of a High-Efficiency (HE) variant common information field illustrated on a left side of FIG. 11 and an Extremely High Throughput (EHT) variant common information field illustrated on a right side of FIG. 11. Bits 0 to 3 (B0 to B3) of the HE variant common information field or the EHT variant common information field are a Trigger Type subfield, which is used to indicate a type of the trigger frame carrying the same (see Table 1). Other subfields in the HE variant common information field or the EHT variant common information field may have structures and configurations as defined or configured in various current and future WLAN protocols of the IEEE 802.11 family, such as IEEE 802.11bn, IEEE 802.11ax, and IEEE 802.11be.

As shown in Table 1, when a value of the Trigger Type subfield at B0-B3 in the HE variant common information field or the EHT variant common information field is set to a preset value (for example, 4), it indicates that a trigger frame carrying the HE variant common information field or the EHT variant common information field is a BSRP trigger frame.

### Trigger Type Field Encoding

**Table 1**

| Trigger Type Field Value | Trigger Frame Variant |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Ranging |
| 9-15 | Reserved |

Step S1 will be described in detail below with reference to FIGS. 10 to 13 according to the following two embodiments of the present disclosure.

In another embodiment, step S1 may comprise: the master AP transmitting a BSRP trigger frame to one slave AP. The BSRP trigger frame has a structure as illustrated in FIG. 11, and a receiver address (RA) field of the BSRP trigger frame is set to a media access control (Media Access Control, MAC) address of the slave AP, so as to indicate that the slave AP transmits first information comprising a BSR related to the slave AP to the master AP. In this embodiment, the master AP specifies one slave AP to transmit the first information through the BSRP trigger frame.

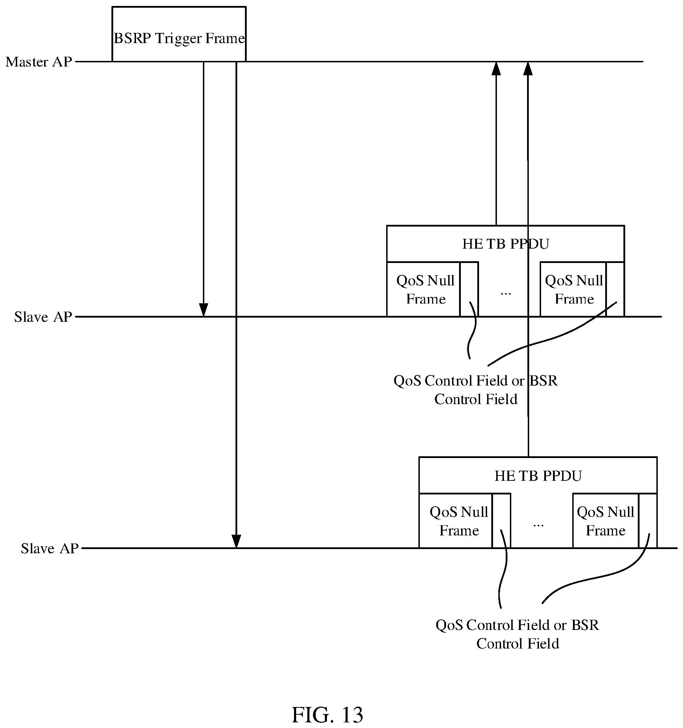

In another embodiment, as illustrated in FIGS. 12 and 13, step S1 may comprise: the master AP transmitting a BSRP trigger frame to one or more slave APs. The BSRP trigger frame has a structure as illustrated in FIG. 11, and an RA field of the BSRP trigger frame is set to a broadcast address, wherein the broadcast address is an address for simultaneously transmitting to one or more slave APs. A User Info List field of the BSRP trigger frame is configured with one or more HE Variant User Info fields or one or more EHT Variant User Info fields. Bits 0 to 11 (B0 to B11) of the HE Variant User Info field or the EHT Variant User Info field are an AID12 subfield (see Table 2). A value of the AID12 subfield corresponds to an association identifier (Association Identifier, AID) of multiple STAs associated with the master AP. In this embodiment, the value of the AID12 subfield further corresponds to an association identifier of multiple slave APs (APID), such that the User Info List field of the BSRP trigger frame is configured to indicate which one or more APs and/or STAs are to respond.

In one example, before step S1, an APID may be configured for each AP. In this embodiment, the master AP specifies one or more slave APs to respectively transmit the first information through the BSRP trigger frame.

**Table 2**

| AID12 Field | Description |
|---|---|
| 0 | The user information field allocates one or more contiguous RA-RUs to an associated STA |
| 1-2007 | The user information field is addressed to an associated STA having an AID equal to a value of the AID12 field |
| 2008-2044 | Reserved |
| 2045 | The user information field allocates one or more contiguous RA-RUs to an unassociated STA |
| 2046 | Unallocated RU |
| 2047-4094 | Reserved |
| 4095 | Not allowed in the user information field because it indicates a start position of a padding field |

In one example, a value of the AID12 subfield within a range from 1 to 2007 indicates an association identifier (AID) of one or more STAs associated with the master AP, and a value of the AID12 subfield within a first range not overlapping with the range from 1 to 2007 (for example, from 2047 to 4094) indicates an association identifier (APID) of one or more slave APs, as illustrated in Table 3. The present disclosure is not limited thereto, as long as a value range of the AID12 subfield indicating an AID of a STA does not overlap with a value range of the AID12 subfield indicating an APID of a slave AP.

**Table 3**

| AID12 Field | Description |
|---|---|
| 0 | The user information field allocates one or more contiguous RA-RUs to an associated STA |
| 1-2007 | The user information field is addressed to an associated STA having an AID equal to a value of the AID12 field |
| 2008-2044 | Reserved |
| 2045 | The user information field allocates one or more contiguous RA-RUs to an unassociated STA |
| 2046 | Unallocated RU |
| 2047-4094 | The user information field is addressed to an AP having an APID equal to a value of the AID12 field |
| 4095 | Not allowed in the user information field because it indicates a start position of a padding field |

In another example, a value range of the AID12 subfield indicating an AID of a STA may overlap with a value range of the AID12 subfield indicating an APID of a slave AP. For example, the AID of a STA and the APID of a slave AP may both be equal to a value within a range from 1 to 2007 of the AID12 subfield (as illustrated in Table 4). In this case, the AID of the STA and the APID of the slave AP may be equal to a same value within the range from 1 to 2007 of the AID12 subfield, for example, AID = 1 and APID = 1, which may cause a conflict.

**Table 4**

| AID12 Field | Description |
|---|---|
| 0 | The user information field allocates one or more contiguous RA-RUs to an associated STA |
| 1-2007 | The user information field is addressed to an associated STA having an AID equal to a value of the AID12 field or to an AP having an APID equal to the value of the AID12 field |
| 2008-2044 | Reserved |
| 2045 | The user information field allocates one or more contiguous RA-RUs to an unassociated STA |
| 2046 | Unallocated RU |
| 2047-4094 | Reserved |
| 4095 | Not allowed in the user information field because it indicates a start position of a padding field |

To avoid conflicts, as illustrated in FIG. 11, a reserved bit in the HE variant common information field of the common information field of the BSRP trigger frame and one reserved bit among multiple reserved bits in the EHT variant common information field are defined as a User Info for AP subfield. The User Info for AP subfield is used to indicate whether a value in an AID12 subfield represents an APID of a slave AP or an AID of a STA.

In one example, bit 63 of the HE variant common information field and any one reserved bit among bit 22, bit 26, bit 53, and bits 56 to 63 of the EHT variant common information field (for example, B22 in FIG. 11) are defined as the User Info for AP subfield.

When a value of the User Info for AP subfield of the BSRP trigger frame is set to a first preset value (for example, 1), it indicates that values in AID12 subfields of multiple user information fields respectively correspond to APIDs of one or more slave APs, rather than AIDs of STAs associated with the master AP. In response to receiving the BSRP trigger frame in which the User Info for AP subfield has the first preset value, a STA receiving the BSRP trigger frame ignores the User Info List field of the BSRP trigger frame, while an AP receiving the BSRP trigger frame is able to demodulate a User Info List field in which a value of an AID12 subfield indicates an APID.

For example, when an AID of a STA and an APID of an AP are assigned with a duplicate value (for example, AID = 1 and APID = 1), a value of the User Info for AP subfield of the BSRP trigger frame is set to 1, indicating that a value in the AID12 subfield is used to indicate an APID of one or more slave APs, rather than an AID of a STA associated with the master AP. In response to receiving the BSRP trigger frame in which the User Info for AP subfield has a value of 1, a STA receiving the BSRP trigger frame ignores the User Info List field of the BSRP trigger frame, while an AP receiving the BSRP trigger frame is able to demodulate a User Info List field in which a value of an AID12 subfield indicates an APID. When the value of the User Info for AP subfield of the BSRP trigger frame is set to 0, a value in the AID12 subfield is used to indicate an AID of a STA.

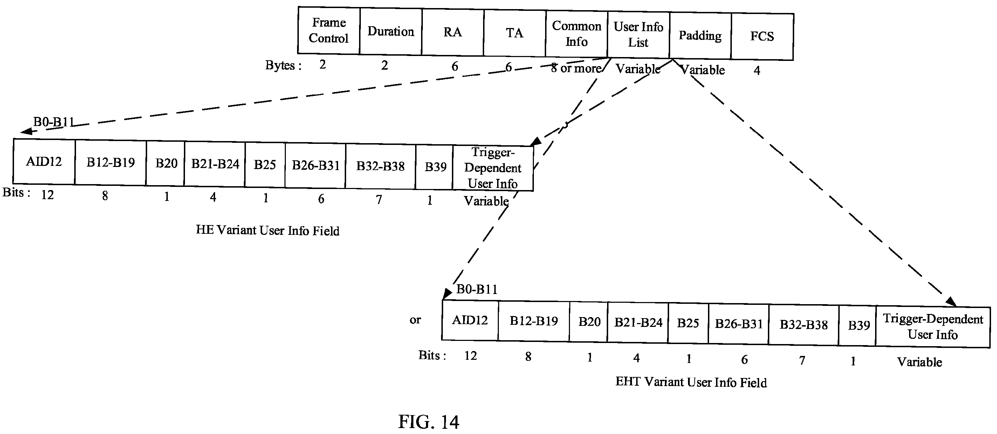

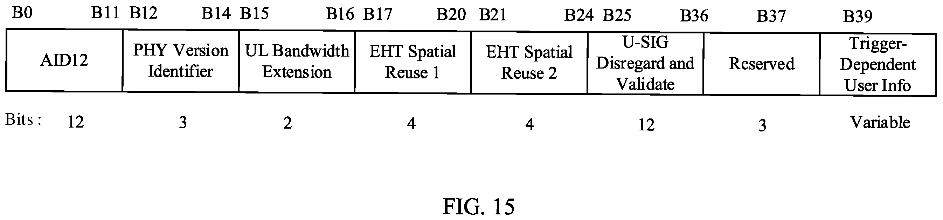

In yet another embodiment, in addition to an HE Variant User Info field or an EHT Variant User Info field illustrated in FIG. 14, a User Info List field of a BSRP trigger frame may further comprise a Special User Info field, as illustrated in FIG. 15.

A value of an AID12 subfield at bits B0 to B11 of the Special User Info field is set to 2007, such that the Special User Info field serves as an extension of the HE variant common information field or the EHT variant common information field and is applicable to all STAs and APs indicated in the User Info List field.

The Special User Info field may comprise: a 12-bit AID12 subfield (at B0 to B11), a 3-bit physical (PHY) version identifier (Version Identifier) subfield (at B12 to B14), a 2-bit uplink (UL) bandwidth extension (Bandwidth Extension) subfield (at B15 to B16), a 4-bit EHT spatial reuse (Spatial Reuse) subfield (at B17 to B20 and B21 to B24), a 12-bit U-SIG disregard and validate (U-SIG Disregard And Validate) subfield (at B25 to B36), three reserved bits (at B37 to B39), and a variable-length trigger dependent user information (Trigger Dependent User Info) subfield. Structures and configurations of the above subfields in the Special User Info field may be implemented according to structures and configurations defined or configured in various current and future WLAN protocols of the IEEE 802.11 family, such as IEEE 802.11bn, IEEE 802.11ax, and IEEE 802.11be.

In one embodiment, a rule for transmitting a BSR by a slave AP as configured by a master AP may be similar to the rule for proactively transmitting a BSR by a slave AP described in the foregoing embodiments. For example, reserved bits B37 to B39 of the Special User Info field may be defined as a rule configured by the master AP for transmitting a BSR by a slave AP, and specific rules are as follows:
1. B37 to B39 = 000: the slave AP independently determines a rule for transmitting a BSR according to a buffer condition of the slave AP;
2. B37 to B39 = 001: the slave AP transmits a BSR corresponding to top m services or top x% of services in descending order of priority;
3. B37 to B39 = 010: the slave AP transmits a BSR corresponding to top m+n services or top (x+y)% of services in descending order of priority;
4. B37 to B39 = 011: the slave AP transmits a BSR corresponding to top m+n+n services or top (x+y+y)% of services in descending order of priority;
5. B37 to B39 = 100: the slave AP transmits a BSR corresponding to top m+n+n+n services or top (x+y+y+y)% of services in descending order of priority;
6. B37 to B39 = 101: the slave AP transmits an aggregate BSR corresponding to all services of the slave AP for multiple associated STAs;
7. B37 to B39 = 110: the slave AP transmits an aggregate BSR corresponding to all services of multiple associated STAs;
8. B37 to B39 = 111: the slave AP transmits an aggregate BSR corresponding to all services of the slave AP for multiple associated STAs and an aggregate BSR corresponding to all services of multiple associated STAs, where m and n are positive integers, and x and y are any values greater than 0 and less than 100.

Other subfields in the Special User Info field may be implemented according to structures and configurations defined or configured in various current and future WLAN protocols of the IEEE 802.11 family, such as IEEE 802.11bn, IEEE 802.11ax, and IEEE 802.11be.

The above rules are provided merely as examples, and the present disclosure is not limited thereto. The master AP may also configure one or more rules for transmitting a BSR by one or more slave APs by redefining part of bits in the common information field and/or the user information field of the trigger frame.

Structures and configurations of fields in the trigger frame that are not described in detail herein, and structures and configurations of subfields thereof, may be implemented according to structures and configurations defined or configured in various current and future WLAN protocols of the IEEE 802.11 family, such as IEEE 802.11bn, IEEE 802.11ax, and IEEE 802.11be.

In the embodiments of the present disclosure, after receiving a BSRP trigger frame transmitted by a master AP, a slave AP replies with first information. For example, the first information may comprise a response frame. The response frame may comprise a (high-efficiency) trigger-based physical layer protocol data unit (HE Trigger-based Physical Layer (PHY) Protocol Data Unit, HE TB PPDU). The (HE) TB PPDU may comprise one or more QoS Null Frames carrying at least one of a quality of service (QoS) Control Field and a BSR Control Field that carry a BSR. The QoS Control Field or the BSR Control Field may indicate BSR information corresponding to the slave AP. The operation in which the slave AP transmits the first information to the master AP has been described in detail above, and detailed description thereof is omitted herein.

Unless explicitly stated otherwise, the foregoing embodiments/examples may be combined with any other one or more embodiments/examples.

The embodiments of the present disclosure further provide a master access point, comprising a processor and a memory. The memory is configured to store a computer program, and the processor is configured to invoke and execute the computer program stored in the memory to perform the method described in the foregoing embodiments.

The embodiments of the present disclosure further provide a slave access point, comprising a processor and a memory. The memory is configured to store a computer program, and the processor is configured to invoke and execute the computer program stored in the memory to perform the method described in the foregoing embodiments.

The embodiments of the present disclosure further provide a chip, comprising a processor configured to invoke and execute a computer program from a memory, such that a device in which the chip is installed performs the method described in the foregoing embodiments.

The embodiments of the present disclosure further provide a computer-readable storage medium, configured to store a computer program, wherein the computer program causes a computer to perform the method described in the foregoing embodiments.

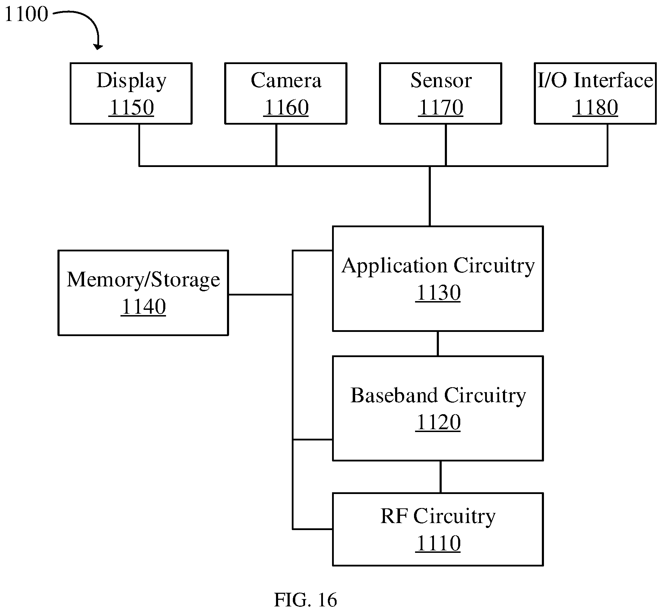

FIG. 16 is a block diagram of an example system 1100 for wireless communication according to an embodiment of the present disclosure. The embodiments of the present disclosure may be implemented in the system using any suitably configured hardware and/or software. FIG. 16 illustrates the system 1100, which at least comprises radio frequency (RF) circuitry 1110, baseband circuitry 1120, application circuitry 1130, memory/storage 1140, a display 1150, a camera 1160, sensors 1170, and an input/output (I/O) interface 1180, which are coupled to one another. The application circuitry 1130 may comprise circuitry including, but not limited to, one or more single-core or multi-core processors. The processors may comprise any combination of general-purpose processors and specialized processors, such as graphics processors and application processors. The processors may be coupled to the memory/storage and configured to execute instructions stored in the memory/storage to run various applications and/or operating systems on the system. In various embodiments, the above-described communication method between the master AP and the slave AP may be implemented in whole or in part in one or more of the RF circuitry, the baseband circuitry, and/or the application circuitry.

Specific examples are used herein to illustrate the principles and implementations of the present disclosure. The descriptions of the foregoing embodiments are provided only to facilitate understanding of the method of the present disclosure and the core concepts thereof. Meanwhile, a person skilled in the art may make changes to specific implementations and application scopes according to the ideas of the present disclosure. In summary, the contents of this specification should not be construed as limiting the present disclosure.

## Claims

1. A method for cooperative communication among multiple access points (APs), wherein the APs comprise a first AP and a second AP, the method comprising:
the second AP transmitting first information to the first AP, wherein the first information comprises a buffer status report (BSR) related to the second AP.

2. The method according to claim 1, wherein the first information comprises at least one of a quality of service (QoS) control field carrying the BSR and a BSR control field.

3. The method according to claim 2, wherein the QoS control field is carried by one or more frames of different subtypes, wherein the different subtypes of frames comprise a QoS Null frame, a QoS Data frame, and a QoS-related frame.

4. The method according to claim 3, wherein the QoS control field is carried by one frame, and the QoS control field carries the BSR corresponding to one preset service.

5. The method according to claim 3, wherein the QoS control field is carried by an aggregated medium access control protocol data unit (A-MPDU);
wherein the A-MPDU aggregates at least one subtype of the frame and a number of frames in the A-MPDU is greater than two; and
the A-MPDU carries the BSR corresponding to more than two preset services.

6. The method according to claim 2, wherein the first information comprises at least one of a QoS Null frame, a QoS Data frame, and a BSR-related management frame carrying the BSR control field.

7. The method according to claim 6, wherein the BSR control field carries the BSR corresponding to multiple preset services.

8. The method according to claim 2, wherein the BSR comprises three configured types of BSRs, wherein the three configured types of BSRs comprise:
a downlink BSR transmitted by the second AP to multiple stations (STAs) associated therewith;
an uplink BSR transmitted by multiple STAs associated with the second AP to the second AP; and
the downlink BSR and the uplink BSR.

9. The method according to claim 8, wherein when the QoS Null frame is transmitted by a hybrid coordinator (HC) or an AP, bit 7 of the QoS control field is defined as a total buffer indication, and bits 8 to 15 of the QoS control field indicate one of the three configured types of BSRs transmitted by the second AP.

10. The method according to claim 8, wherein when a value of bit 0 of an AP power-saving buffer status subfield in the QoS control field is set to a first preset value, the AP power-saving buffer status subfield indicates one of the three configured types of BSRs transmitted by the second AP.

11. The method according to claim 8, wherein when the BSR control field carries the BSR and a value of a control identifier subfield in the BSR control field is set to a second preset value, all queue size subfields and queue size high subfields in the BSR control field indicate one of the three configured types of BSRs transmitted by the second AP.

12. The method according to claim 8, wherein when the BSR control field carries the BSR and a value of the control identifier subfield in the BSR control field is set to a third preset value, a control information subfield indicates one of the three configured types of BSRs transmitted by the second AP.

13. The method according to claim 12, wherein the third preset value ranges between 7 and 14.

14. The method according to any one of claims 1 to 13, further comprising:
receiving a trigger frame transmitted by the first AP; and
based on an indication of the received trigger frame, transmitting the first information to the first AP.

15. The method according to claim 14, wherein a common information field of the trigger frame comprises a high efficiency (HE) variant common information field or an extremely high throughput (EHT) variant common information field;
a value of a trigger type subfield of the HE variant common information field or the EHT variant common information field is set to a fourth preset value to indicate that the trigger frame is a buffer status report polling (BSRP) trigger frame; and
a receiver address (RA) field of the BSRP trigger frame is set to a media access control address of the second AP to indicate that only one second AP transmits the first information to the first AP.

16. The method according to claim 14, wherein a common information field of the trigger frame comprises a high efficiency (HE) variant common information field or an extremely high throughput (EHT) variant common information field;
a value of a trigger type subfield of the HE variant common information field or the EHT variant common information field is set to a fourth preset value to indicate that the trigger frame is a buffer status report polling (BSRP) trigger frame;
an RA field of the BSRP trigger frame is set to a broadcast address; and
at least one of a user information list field of the BSRP trigger frame and the common information field indicates that at least one second AP transmits the first information to the first AP.

17. The method according to claim 16, wherein the user information list field of the BSRP trigger frame comprises an HE variant user information field and/or an EHT variant user information field;
a value of bit 63 of the HE variant common information field or any one of bits 22, 26, 53, and 56 to 63 of the EHT variant common information field is set to a fifth preset value;
the fifth preset value indicates that association identifier (AID12) subfields of multiple user information fields in the user information list field respectively correspond to identifiers of multiple second APs; and
the user information list field comprising the AID12 subfields corresponding to the identifiers of the multiple second APs indicates that at least one second AP transmits the first information to the first AP.

18. The method according to claim 16, further comprising:
before transmitting the first information to the first AP, configuring a value range of an AID12 field corresponding to identifiers of multiple stations (STAs) associated with the first AP and a value range of the AID12 field corresponding to identifiers of multiple second APs, wherein the two value ranges of the AID12 field do not overlap;
wherein each value in the two value ranges of the AID12 field indicates one of an identifier of a second AP and an identifier of a station (STA); and
the user information list field of the BSRP trigger frame indicates that at least one second AP transmits the first information to the first AP.

19. The method according to claim 1, wherein
a rule for transmitting the first information from the second AP is configured through a preset field of a beacon frame, a probe response frame, a rule configuration frame, or a BSRP trigger frame.

20. The method according to claim 19, wherein the rule for transmitting the first information from the second AP comprises:
when a value of the preset field of the beacon frame, the probe response frame, the rule configuration frame, or the BSRP trigger frame is set to 0, indicating that the second AP independently determines a rule for transmitting the BSR according to a buffer condition of the second AP;
when the value of the preset field is set to 1, indicating that the second AP transmits the BSR corresponding to top *m* services or top *x*% of services in descending order of priority;
when the value of the preset field is set to 2, indicating that the second AP transmits the BSR corresponding to top *m*+*n* services or top *(x*+*y)*% of services in descending order of priority;
when the value of the preset field is set to 3, indicating that the second AP transmits the BSR corresponding to top *m*+*n*+*n* services or top *(x*+*y*+*y)*% of services in descending order of priority;
when the value of the preset field is set to 4, indicating that the second AP transmits the BSR corresponding to top *m*+*n*+*n*+*n* services or top *(x*+*y*+*y*+*y)*% of services in descending order of priority;
when the value of the preset field is set to 5, indicating that the second AP transmits the downlink BSR corresponding to all services to be transmitted to multiple associated STAs;
when the value of the preset field is set to 6, indicating that the second AP transmits the uplink BSR corresponding to all services of multiple associated STAs; and
when the value of the preset field is set to 7, indicating that the second AP transmits the downlink BSR and the uplink BSR,
wherein *m* and n are positive integers, and *x* and *y* are any values greater than 0 and less than 100.

21. The method according to claim 20, wherein the user information list field of the BSRP trigger frame comprises a special user information field;
when an AID12 subfield of the special user information field is set to 2007, reserved bits of the special user information field indicate the rule for transmitting the first information from the second AP as configured by the first AP.

22. An access point, comprising:
a processor; and
a memory configured to store computer program,
wherein the processor is configured to invoke and execute the computer program stored in the memory to perform the method according to any one of claims 1 to 21.

23. A chip, comprising:
a processor configured to invoke and execute a computer program from a memory, such that a device in which the chip is installed performs the method according to any one of claims 1 to 21.

24. A computer-readable storage medium, configured to store computer program, wherein the computer program causes a computer to perform the method according to any one of claims 1 to 21.

25. A method for cooperative communication among multiple access points (APs), wherein the APs comprise a first AP and a second AP, the method comprising:
the first AP receiving first information from the second AP, wherein the first information comprises a buffer status report (BSR) related to the second AP.

26. The method according to claim 25, wherein the first information comprises at least one of a quality of service (QoS) control field carrying the BSR and a BSR control field.

27. The method according to claim 26, wherein the QoS control field is carried by one or more frames of different subtypes, wherein the different subtypes of frames comprise a QoS Null frame, a QoS Data frame, and a QoS-related frame.

28. The method according to claim 27, wherein the QoS control field is carried by one frame, and the QoS control field carries the BSR corresponding to one preset service.

29. The method according to claim 27, wherein the QoS control field is carried by an aggregated medium access control protocol data unit (A-MPDU);
wherein the A-MPDU aggregates at least one subtype of the frame and a number of frames in the A-MPDU is greater than two; and
the A-MPDU carries the BSR corresponding to more than two preset services.

30. The method according to claim 26, wherein the first information comprises at least one of a QoS Null frame, a QoS Data frame, and a BSR-related management frame carrying the BSR control field.

31. The method according to claim 30, wherein the BSR control field carries the BSR corresponding to multiple preset services.

32. The method according to claim 26, wherein the BSR comprises three configured types of BSRs, wherein the three configured types of BSRs comprise:
a downlink BSR transmitted by the second AP to multiple stations (STAs) associated therewith;
an uplink BSR transmitted by multiple STAs associated with the second AP to the second AP; and
the downlink BSR and the uplink BSR.

33. The method according to claim 32, wherein when the QoS Null frame is transmitted by a hybrid coordinator (HC) or an AP, bit 7 of the QoS control field is defined as a total buffer indication, and bits 8 to 15 of the QoS control field indicate one of the three configured types of BSRs transmitted by the second AP.

34. The method according to claim 32, wherein when a value of bit 0 of an AP power-saving buffer status subfield in the QoS control field is set to a first preset value, the AP power-saving buffer status subfield indicates one of the three configured types of BSRs transmitted by the second AP.

35. The method according to claim 32, wherein when the BSR control field carries the BSR and a value of a control identifier subfield in the BSR control field is set to a second preset value, all queue size subfields and queue size high subfields in the BSR control field indicate one of the three configured types of BSRs transmitted by the second AP.

36. The method according to claim 32, wherein when the BSR control field carries the BSR and a value of the control identifier subfield in the BSR control field is set to a third preset value, a control information subfield indicates one of the three configured types of BSRs transmitted by the second AP.

37. The method according to claim 36, wherein the third preset value ranges between 7 and 14.

38. The method according to any one of claims 25 to 37, further comprising:
transmitting a trigger frame to the second AP; and
receiving, from the second AP, the first information transmitted based on the received trigger frame.

39. The method according to claim 38, wherein a common information field of the trigger frame comprises a high efficiency (HE) variant common information field or an extremely high throughput (EHT) variant common information field;
a value of a trigger type subfield of the HE variant common information field or the EHT variant common information field is set to a fourth preset value to indicate that the trigger frame is a buffer status report polling (BSRP) trigger frame; and
a receiver address (RA) field of the BSRP trigger frame is set to a media access control address of the second AP to indicate that only one second AP transmits the first information to the first AP.

40. The method according to claim 38, wherein a common information field of the trigger frame comprises a high efficiency (HE) variant common information field or an extremely high throughput (EHT) variant common information field;
a value of a trigger type subfield of the HE variant common information field or the EHT variant common information field is set to a fourth preset value to indicate that the trigger frame is a buffer status report polling (BSRP) trigger frame;
an RA field of the BSRP trigger frame is set to a broadcast address; and
at least one of a user information list field of the BSRP trigger frame and the common information field indicates that at least one second AP transmits the first information to the first AP.

41. The method according to claim 40, wherein the user information list field of the BSRP trigger frame comprises an HE variant user information field or an EHT variant user information field;
a value of bit 63 of the HE variant common information field or any one of bits 22, 26, 53, and 56 to 63 of the EHT variant common information field is set to a fifth preset value;
the fifth preset value indicates that association identifier (AID12) subfields of multiple user information fields in the user information list field respectively correspond to identifiers of multiple second APs; and
the user information list field comprising the AID12 subfields corresponding to the identifiers of the multiple second APs indicates that at least one second AP transmits the first information to the first AP.

42. The method according to claim 40, further comprising:
before transmitting the first information to the first AP, configuring a value range of an AID12 field corresponding to identifiers of multiple stations (STAs) associated with the first AP and a value range of the AID12 field corresponding to identifiers of multiple second APs, wherein the two value ranges of the AID12 field do not overlap;
wherein each value in the two value ranges of the AID 12 field indicates one of an identifier of a second AP and an identifier of a station (STA); and
the user information list field of the BSRP trigger frame indicates that at least one second AP transmits the first information to the first AP.

43. The method according to any one of claims 25 to 42, wherein
a rule for transmitting the first information from the second AP is configured through a beacon frame, a probe response frame, a rule configuration frame, or a BSRP trigger frame.

44. The method according to claim 43, wherein the rule for transmitting the first information from the second AP comprises:
when a value of a preset field of the beacon frame, the probe response frame, the rule configuration frame, or the BSRP trigger frame is set to 0, indicating that the second AP independently determines a rule for transmitting the BSR according to a buffer condition of the second AP;
when the value of the preset field is set to 1, indicating that the second AP transmits the BSR corresponding to top *m* services or top x% of services in descending order of priority;
when the value of the preset field is set to 2, indicating that the second AP transmits the BSR corresponding to top *m*+*n* services or top *(x*+*y)*% of services in descending order of priority;
when the value of the preset field is set to 3, indicating that the second AP transmits the BSR corresponding to top *m*+*n*+*n* services or top *(x*+*y*+*y)*% of services in descending order of priority;
when the value of the preset field is set to 4, indicating that the second AP transmits the BSR corresponding to top *m*+*n*+*n+n* services or top *(x*+*y*+*y*+*y)*% of services in descending order of priority;
when the value of the preset field is set to 5, indicating that the second AP transmits a downlink BSR corresponding to all services to be transmitted to multiple associated STAs;
when the value of the preset field is set to 6, indicating that the second AP transmits an uplink BSR corresponding to all services of multiple associated STAs; and
when the value of the preset field is set to 7, indicating that the second AP transmits the downlink BSR and the uplink BSR,
wherein *m* and *n* are positive integers, and x and *y* are any values greater than 0 and less than 100.

45. The method according to claim 44, wherein the user information list field of the BSRP trigger frame comprises a special user information field; and
when an AID12 subfield of the special user information field is set to 2007, reserved bits of the special user information field indicate the rule for transmitting the first information from the second AP as configured by the first AP.

46. An access point, comprising:
a processor; and
a memory configured to store computer program,
wherein the processor is configured to invoke and execute the computer program stored in the memory to perform the method according to any one of claims 22 to 42.

47. A chip, comprising:
a processor configured to invoke and execute a computer program from a memory, such that a device in which the chip is installed performs the method according to any one of claims 22 to 42.

48. A computer-readable storage medium, configured to store computer program, wherein the computer program causes a computer to perform the method according to any one of claims 22 to 42.
